(19) Europäisches Patentamt
European Patent Office
Office européen des brevets

(11) Numéro de publication: **0 232 634**
**A1**

(12) **DEMANDE DE BREVET EUROPEEN**

(21) Numéro de dépôt: **86402490.6**

(51) Int. Cl.⁴: **F16G 11/04**

(22) Date de dépôt: **07.11.86**

(30) Priorité: **17.01.86 US 820190**

(43) Date de publication de la demande: **19.08.87 Bulletin 87/34**

(84) Etats contractants désignés: **DE ES FR GB IT**

(71) Demandeur: **CIBELES INTERNATIONAL INC.**
**P.O. Box 5108**
**Panama 5(PA)**

(72) Inventeur: **Biass, David**
**7, rue Chandieu**
**Genève(CH)**

(74) Mandataire: **Lefebure, Gérard et al**
**Office Blétry 2, boulevard de Strasbourg**
**F-75010 Paris(FR)**

(54) **Bloc de serrage par coins réversibles pour objet allongé tel que câble ou barre.**

(57) Bloc de serrage par coins réversibles pour objet allongé, tel que câble ou barre, comprenant un carter (1) de forme allongée, qui est ouvert à ses deux extrémités et qui définit un passage apte à recevoir ledit objet allongé (4), et une première paire de clavettes (7a et 7b), en forme de coins, qui sont montées dans le passage du carter pour serrer ledit objet allongé. Chacune des deux clavettes comporte, dans sa surface interne, une rainure longitudinale (9) ayant deux parois latérales planes (9a et 9b), qui convergent vers le fond de la rainure et qui font chacune un angle prédéterminé ( $\alpha_2$) avec le plan ($PL_1$) dans lequel se déplacent les deux clavettes. Une seconde paire de clavettes (11a et 11b), est disposée dans les rainures longitudinales (9) de la première paire de clavettes (7a et 7b), chacune des clavettes (11a et 11b) de la seconde paire comportant une surface externe qui a, en coupe transversale, une section en V et qui est en contact avec l'une des deux parois latérales de la rainure (9) de l'une des deux clavettes (7a et 7b)de la première paire et avec l'une des deux parois latérales de la rainure (9) de l'autre clavette de la première paire.

FIG.2

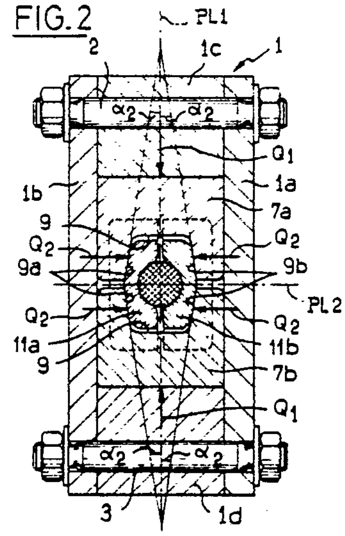


EP 0 232 634 A1

Xerox Copy Centre

## Bloc de serrage par coins réversibles pour objet allongé tel que câble ou barre.

La présente invention concerne un bloc de serrage par coins réversible pour objet allongé tel que câble ou barre, comprenant un carter de forme allongée, qui est ouvert à ses deux extrémités et qui définit un passage apte à recevoir ledit objet allongé, et une paire de clavettes en forme de coins, qui sont montées dans le passage du carter pour serrer ledit object allongé, ledit passage comportant deux surfaces internes, qui sont respectivement disposées de part et d'autre de l'axe longitudinal dudit passage et qui convergent vers une extrémité de celui-ci en faisant un angle prédéterminé avec ledit axe longitudinal, chacune desdites clavettes comportant une surface externe, qui est en contact avec une des deux surfaces internes du passage du carter, et une surface interne, qui est tournée vers ledit objet allongé et dans laquelle est formée une rainure longitudinale, les deux clavettes étant mobiles dans un plan qui passe par l'axe longitudinal du passage du carter.

Les blocs de serrage par coins réversibles auxquels se réfère la présente invention sont utilisés dans de nombreux dispositifs ou appareils, comme par exemple dans les dispositifs moteurs fonctionnant par reprises successives, les treuils hydrauliques linéaires, les dispositifs d'ancrage de câbles ou de barres, et dans certains dispositifs de manutention. D'une manière générale, les blocs de serrage par coins réversibles sont utilisés dans les cas où on désire serrer au moins momentanément un objet de forme allongée,par exemple pour exercer une traction sur ledit objet, et où les clavettes du bloc de serrage doivent être capables de relâcher ensuite la pression de serrage qu'elles exercent sur ledit objet, sans démontage du bloc de serrage, par un simple mouvement relatif de sens opposé au sens de traction ou par l'action d'un dispositif de commande.

De nombreux blocs de serrage ont déjà été proposés. Ils peuvent être classés en deux catégories, à savoir les blocs de serrage dont les clavettes de serrage ont une surface externe inclinée, plane ou conique, qui est directement en contact avec la surface interne plane ou conique, inclinée de manière correspondante, du carter du bloc de serrage (voir par exemple les brevets US 1.637.270, 2.146.575, 2.958.916, 3.758.922 et 4.381.584, le brevet DE 405.524 et le brevet GB 13.230), et les blocs de serrage dans lesquels des rouleaux ou des billes sont interposés entre la surface externe des clavettes de serrage et la surface interne du carter du bloc de serrage (voir par exemple les brevets US 1.146.801 et 2.400.514 et le brevet EP 0057622).

D'après la théorie générale des coins exposée notamment dans la publication "Techniques de l'Ingénieur", Mécanique et Chaleur, volume 3, pages B 602-1 à 602-3, la force d'enfoncement P, parallèle à l'axe du coin (clavette de serrage) et la force Q normale à l'axe, appliquée au coin, sont liées par la relation suivante dans le cas des coins à surfaces inclinées planes :

$$Q = \frac{P}{2\ tg\ (\alpha + \varphi)} \qquad (1)$$

dans laquelle $\alpha$ est l'angle entre l'axe et une face inclinée du coin (l'axe étant la droite passant par la pointe du coin et perpendiculaire à la base de celui-ci) et $\phi$ est un angle tel que $tg\ \phi = f$, f étant le coefficient de frottement des faces du coin (la face externe d'une clavette de serrage et la face interne du carter du bloc de serrage) qui sont mutuellement en contact. Dans le cas des coins à surface conique, la formule (1) devient :

$$Q = \frac{P}{\pi\ tg\ (\alpha - \varphi)} \qquad (2)$$

$\alpha$ étant dans ce cas l'angle entre l'axe et une génératrice de la surface conique du coin.

Dans les deux cas, la condition de réversibilité du coin est $\alpha > \phi$.

Lorsque l'objet à serrer est un câble ou une barre à section transversale sensiblement ronde, la surface interne des clavettes du bloc de serrage, c'est-à-dire la surface des clavettes qui est en contact avec l'objet à serrer, comporte habituellement une rainure à section transversale semi-circulaire, dont le rayon correspond au rayon de la section transversale du câble ou de la barre à serrer. Dans ce cas, en admettant que la pression due au serrage se transmette hydrostatiquement à l'intérieur du câble, la force d'adhérence ou force de frottement F entre chaque clavette du bloc de serrage et le câble est donnée par la formule :

$F = \pi . Q . f'$ (3)
dans laquelle Q a la signification déjà indiquée et f′ représente le coefficient de frottement entre la clavette de serrage et le câble. en remplaçant Q par sa valeur, donnée par la formule (1) ou par la formule (2), on obtient :

$$F = \frac{\pi . P . f'}{2 \, tg \, (\alpha + \varphi)} \qquad (4)$$

ou :

$$F = \frac{P . f'}{tg \, (\alpha + \varphi)} \qquad (5)$$

Les formules (4) et (5) peuvent encore s'écrirent : F = k P (6)
avec:

$$k = \frac{\pi . f'}{2 \, tg \, (\alpha + \varphi)} \qquad (7)$$

dans le cas des clavettes de serrage à surface externe plane, et :

$$k = \frac{f'}{tg \, (\alpha + \varphi)} \qquad (8)$$

dans le cas des clavettes de serrage à surface externe conique.

Pour qu'il n'y ait pas de glissement entre chaque clavette de serrage et le câble à serrer, il faut que la valeur absolue de la force de frottement F soit supérieure ou égale à la valeur absolue de la force d'enfoncement P (ces deux forces sont orientées en sens opposés). Autrement dit, il faut que k soit supérieur ou égal à 1. Pour cela, d'après les formules (7) et (8) on voit qu'il faut que f′ soit le plus grand possible et/ou que ($\alpha + \phi$) soit le plus petit possible.

Par exemple, avec un câble en acier et des clavettes de serrage en acier ayant une rainure à surface lisse, f′ est égal 0,1. Pour des clavettes de serrage en acier, dont la surface externe est directement en contact avec la surface interne du carter du bloc de serrage, l'angle $\phi$ est environ égal à 6°. Compte tenu de la condition de réversibilité ($\alpha > \phi$), l'angle $\alpha$ est par exemple choisi égal à 8°30′. Dans ces conditions, d'après les formules (7) et (8), k est égal à 0,61 ou 0,39 selon que les clavettes de serrage ont une surface externe plane ou conique. Dans les deux cas, on voit que la force de frottement F est plus petite que la force d'enfoncement P et il y a donc un glissement entre les clavettes de serrage et le câble.

Pour éviter tout glissement entre les clavettes de serrage et le câble,une première solution connue consiste à augmenter fortement le coefficient de frottement f′ en formant des stries ou des crans dans la surface de la rainure des clavettes de serrage, qui est en contact avec le câble (voir par exemples les brevets US 1.637.270, 2.146.575, 2.958.916, 3.758.922 et 4.381.584). Toutefois, les stries ou les crans ont pour inconvénient de blesser la surface externe du câble, en particulier lorsqu'une forte pression de serrage doit être appliquée au câble, par exemple pour exercer une forte traction sur celui-ci.

Une autre solution connue consiste à réduire considérablement, voire à annuler la valeur de l'angle $\phi$, c'est-à-dire à diminuer considérablement ou à supprimer les frottements entre la surface externe des clavettes de serrage et la surface interne du carter du bloc de serrage, en interposant entre ces surfaces des rouleaux ou des billes, comme montré par exemple dans les brevets US 1.146.801 et 2.400.514 ou dans le brevet EP 0057622. Ceci permet en outre de réduire la valeur de l'angle $\alpha$ tout en continuant à satisfaire la condition de réversibilité. Par exemple, avec des rouleaux ($\phi$# 0) et avec des clavettes de serrage ayant une pente de 0,1 ($\alpha$ = 5°42′), et avec un coefficient de frottement f′ = 0,1, d'après la formule - (7) k est égal à 1,57. Dans ce cas, la force de frottement F entre le câble et les clavettes est bien supérieure à la force d'enfoncement P et il n'y a pas de glissement entre les clavettes et le câble. Toutefois, à forces de serrage et à forces de traction égales, les blocs de serrage avec rouleaux ou billes ont l'inconvénient de présenter des dimensions, un poids et un coût plus élevés que les blocs de serrage

dans lesquels les clavettes de serrage sont directement en contact avec la surface interne du carter du bloc de serrage. En outre, étant donné que les pressions de contact entre les rouleaux, d'une part, et la surface externe des clavettes de serrage et la surface interne du carter du bloc de serrage, d'autre part, sont localement plus importantes que dans le cas où la surface externe des clavettes de serrage est directement en contact avec la surface interne du carter, les clavettes de serrage et le carter doivent être réalisés dans des aciers plus durs ou leurs surfaces en contact avec les rouleaux doivent être traitées, par exemple par un traitement thermique, pour les rendre plus dures et aptes à résister aux pressions de contact localement plus élevées, ce qui augmente encore le coût des blocs de serrage avec rouleaux.

La présente invention a donc pour but de fournir un bloc de serrage par coins réversibles, sans rouleau ou sans bille, dans lequel les clavettes de serrage ont une surface lisse de contact avec le câble ou autre objet allongé à serrer, donc sans risque de blessure pour le câble ou ledit objet allongé, sans pour autant qu'il en résulte un glissement entre lesdites clavettes de serrage et ledit câble ou ledit objet allongé.

La présente invention a également pour but de fournir un bloc de serrage par coins réversibles, dont les dimensions, le poids et le coût sont plus faibles que ceux d'un bloc de serrage avec rouleaux ou billes.

A cet effet, le bloc de serrage selon la présente invention est caractérisé en ce que la rainure longitudinale de chacune des deux clavettes comporte deux parois latérales planes, qui convergent vers le fond de la rainure et qui font chacune un angle prédéterminé avec le plan dans lequel se déplacent les deux clavettes, et en ce qu'il comprend en outre une seconde paire de clavettes, qui sont disposées dans les rainures longitudinales de la première paire de clavettes, chacune des clavettes de la seconde paire comportant une surface externe qui a, en coupe transversale, une section en V et qui est en contact avec l'une des deux parois latérales de la rainure de l'une des deux clavettes de la première paire et avec l'une des deux parois latérales de la rainure de l'autre clavette de la première paire, et une surface interne qui est tournée vers ledit objet allongé, les deux clavettes de la seconde paire étant mobiles perpendiculairement à l'axe longitudinal du passage du carter dans un second plan perpendiculaire au premier plan susmentionné (c'est-à-dire le plan dans lequel se déplacent les clavettes de la première paire), et des moyens d'accouplement coopérant avec les clavettes des première et seconde paires pour empêcher tout mouvement relatif axial entre lesdites première et seconde paires de clavettes, tout en permettant des mouvements relatifs transversaux entre lesdites première et seconde paires de clavettes.

L'invention sera mieux comprise au cours de la description suivante de diverses formes d'exécution du bloc de serrage, donnée en référence aux dessins annexés sur lesquels :

La figure 1 montre, moitié en élévation latérale, moitié en coupe longitudinale, une première forme d'exécution du bloc de serrage.

La figure 2 est une vue en coupe suivant le ligne II-II de la figure 1.

La figure 2a montre, en perspective, une partie de deux clavettes de serrage utilisées dans le bloc de serrage des figures 1 et 2.

La figure 3 montre, moitié en élévation latérale, moitié en coupe longitudinale, une deuxième forme d'exécution du bloc de serrage.

La figure 4 est une vue en coupe suivant la ligne IV-IV de la figure 3.

La figure 5 montre, moitié en élévation latérale, moitié en coupe longitudinale, une troisième forme d'exécution du bloc de serrage.

La figure 6 est une vue en coupe suivant la ligne VI-VI de la figure 5.

Le bloc de serrage représenté sur les figures 1 et 2 comprend un carter 1, de forme générale parallélépipédique, comportant de façon classique deux plaques rectangulaires planes 1a et 1b et deux blocs d'appui 1c et 1d, qui sont disposés entre les deux plaques 1a et 1b et assemblés à celles-ci par deux séries de goujons 2 et 3, respectivement. Les deux plaques 1a et 1b et les deux blocs d'appui 1c et 1d définissent entre eux un passage pour un objet allongé à serrer, par exemple un câble 4. Chacun des deux blocs d'appui 1c et 1d a une surface interne plane 5 qui fait un angle $\alpha_1$ avec l'axe longitudinal 6 du passage du carter, les deux surfaces 5 convergeant vers une extrémité dudit passage.

Une première paire de clavettes de serrage 7a et 7b est disposée dans le passage susmentionné, respectivement de par et d'autre du câble 4. Chacune des deux clavettes 7a et 7b a une surface externe plane 8, qui est inclinée de l'angle $\alpha_1$ par rapport à l'axe 6 et qui est en contact glissant avec la surface interne 5 de l'un des deux blocs d'appui 1c et 1d. Ainsi, tout mouvement longitudinal relatif entre chacune des deux clavettes de serrage 7a et 7b et le bloc d'appui adjacent 1c ou 1d, respectivement, provoque un mouvement des clavettes de serrage 7a et 7b perpendiculairement à l'axe 6 dans le plan $PL_1$ (figure 2).

Dans leur surface interne, c'est-à-dire celle qui est tournée vers le câble 4, chacune des deux clavettes de serrage 7a et 7b comporte une rainure longitudinale 9 qui s'étend parallèlement à l'axe 6. Comme cela est plus particulièrement visible sur la figure 2, chaque rainure 9 comporte deux parois latérales planes 9a et 9b, qui convergent vers le fond de la rainure 9 en faisant chacune un angle $\alpha_2$ avec le plan $PL_1$. A

l'intérieur des deux rainures 9 est disposée une seconde paire de clavettes de serrage 11a et 11b (voir aussi la figure 2a). Chacune des deux clavettes 11a et 11b comporte une surface externe 12 qui a, vue en coupe transversale, une section en V aplati . Plus précisément, chacune des deux branches du V fait un angle $\alpha_2$ avec le plan $PL_1$. La surface externe 12 de la clavette 11a est en contact glissant avec les parois latérales 9a des rainures 9 des deux clavettes 7a et 7b, tandis que la surface externe 12 de la clavette 11b est en contact glissant avec les parois latérales 9b des rainures 9 des deux clavettes 7a et 7b. Chacune des deus clavettes 11a et 11b comporte, dans sa surface interne , c'est-à-dire celle qui est tournée vers le câble 4, une rainure longitudinale 13 ayant une surface lisse et une section transversale semi-circulaire, qui recoit une partie du câble 4. Ainsi, tout déplacement des clavettes 7a et 7b perpendiculairement à l'axe 6 dans le plan $PL_1$ provoque un déplacement des clavettes 11a et 11b perpendiculairement à l'axe 6 dans le plan $PL_2$ qui est perpendiculaire au $PL_1$. Plus précisément, les deux clavettes 11a et 11b serrent le câble 4 lorsque les deux clavettes 7a et 7b sont déplacées vers l'axe 6 dans le plan $PL_1$, tandis qu'elles relâchent le câble 4 lorsque les deux clavettes 7 a et 7b sont écartées de l'axe 6 dans le plan $PL_1$.

Comme cela est plus particulièrement visible dans les figures 1 et 2a, chacune des deux clavettes 11a et 11b comporte, à chacune de ses extrémités, une partie 14 qui fait latéralement saillie vers l'extérieur et qui est en contact glissant avec les faces d'extrémité des deux clavettes 7a et 7b à une extrémité de celles-ci. Ainsi, les clavettes 7a et 7b sont retenues axialement entre les quatre parties 14 en saillie des clavettes 11a et 11b, de sorte que tout mouvement axial transmis par frottement par le câble 4 aux clavettes 11a et 11b, est également transmis aux deux clavettes 7a et 7b. Néanmoins, les deux clavettes 7a et 7b restent libres de se déplacer transversalement par rapport aux deux clavettes 11a et 11b pour le serrage et de desserrage du câble 4.

Comme montré dans les figures 1 et 2 a, les parties 14 en saillie des deux clavettes 11a et 11b font partie intégrante desdites clavettes, mais elles pourraient être constituées par des pièces fixées de manière détachable aux extrémités des clavettes 11a et 11b. A titre de variante, au lieu que les parties 14 en saillie soient fixées aux extrémités des clavettes 11a et 11b, elles pourraient être fixées aux extrémités des clavettes 7a et 7b et être en contact glissant avec les faces d'extrémité des clavettes 11a et 11b. Suivant une autre variante encore, les rainures 9 des deux clavettes 7a et 7b pourraient être fermées à leurs deux extrémités, les clavettes 11a et 11b étant alors retenues axialement à l'intérieur des rainures 9 par les extrémités fermées de celles-ci.

Avec le bloc de serrage qui a été décrit ci-dessus, il est possible de serrer le câble 4 sans le blesser - (les rainures 13 ont une surface lisse) et sans risque de glissement entre le câble 4 et les clavettes 11a et 11b, comme on va maintenant le voir. En effet, lorsque chacune des deux clavettes 7a et 7b est soumise à une force d'enfoncement P (figure 1), ou, ce qui revient au même, lorsque le carter 1 est soumis à une poussée P' opposée à la force d'enfoncement P, chacune des deux clavettes 7a et 7b est soumise à une force $Q_1$, qui est normale à l'axe 6 et qui, d'après la formule (1) est égale à :

$$Q_1 = \frac{P}{2\ tg\ (\alpha_1 + \varphi_1)} \qquad (9)$$

dans laquelle $\alpha_1$ a la signification déjà indiquée plus haut et tg $\phi_1$ est le coefficient de frottement entre les clavettes 7a et 7b et le carter 1. Sous l'effet de la force $Q_1$, chacune des deux clavettes 7a et 7b applique à chacune des deux clavettes 11a et 11b une force $Q_2$, qui est normale à la force $Q_1$ et à l'axe 6 et qui, d'après la formule (1), est égale à :

$$Q_2 = \frac{Q_1}{2\ tg\ (\alpha_2 + \varphi_2)} \qquad (10)$$

dans laquelle $\alpha_2$ a la signification déjà indiquée plus haut et tg $\phi_2$ est le coefficient de frottement entre les clavettes 11a et 11 b et les clavettes 7a et 7b. Ainsi, chacune des deux clavettes 11a et 11b est soumise à une force qui est normale à l'axe 6 et qui est égale à 2 $Q_2$. En remplaçant Q par 2 $Q_2$ dans la formule (3), la force de frottement F entre chacune des deux clavettes 11a et 11b et le câble 4 est donc égale à :

$F = \pi . 2\ Q_2 . f'$ (11)

dans laquelle f' est le coefficient de frottement entre les clavettes 11a et 11b et le câble 4. En tenant compte des formules (9) et (10), la formule (11) devient :

$$F = \frac{\pi \cdot P \cdot f'}{2\,tg\,(\alpha_1 + \varphi_1) \cdot tg\,(\alpha_2 - \varphi_2)} \qquad (12)$$

Avec $f' = 0{,}1, \alpha_1 = \alpha_2 = 8°30'$ et $\phi_1 = \phi_2 = 6°$, on obtient :
$F \simeq 2{,}35\ P$ (13)

D'après ce qui précède, il est clair qu'avec le bloc de serrage représenté dans les figures 1 et 2, la force de frottement F entre chacune des deux clavettes 11a et 11b est plus grande que la force d'enfoncement P, et que par suite il n'y a aucun glissement entre le câble 4 et les clavettes 11a et 11b.

Dans la forme d'exécution représentée sur les figures 3 et 4, les éléments du bloc de serrage qui sont identiques ou qui ont la même fonction que ceux du bloc de serrage représenté sur les figures 1 et 2, sont désignés par les mêmes numéros de référence. Le bloc de serrage représenté sur les figures 3 et 4 diffère essentiellement du bloc de serrage représenté sur les figures 1 et 2 en ce que le carter 1 n'est plus formé de plusieurs pièces assemblées, mais d'une seule pièce taillée dans un bloc cylindrique 10. En outre, les surfaces internes 5 du carter 1 et les surfaces externes 8 des deux clavettes 7a et 7 b ne sont plus planes, mais hémi-cylindriques, les axes des surfaces hémi-cylindriques faisant l'angle $\alpha_1$ avec l'axe 6. En outre, afin de réduire le diamètre extérieur du carter cylindrique 1, les surfaces internes 5 dudit carter et les surfaces externes 8 des deux clavettes 7a et 7b sont de préférence étagées ou en gradins, comme montré dans la figure 3.

Au lieu d'être hémi-cylindriques, les surfaces internes 5 du carter 1 et les surfaces externes 8 des deux clavettes 7a et 7b pourraient être coniques. Toutefois, des surfaces hémi-cylindriques sont préférables à des surfaces coniques, car les surfaces hémi-cylindriques donnent toujours un contact surface sur surface quel que soit le degré d'enfoncement des clavettes 7a et 7b dans le carter 1, alors des surfaces coniques donneraient, pour chacune des deux clavettes 7a et 7b, successivement un contact linéaire le long d'une génératrice des surfaces coniques, un contact surface sur surface et un contact linéaire le long de deux génératrices des surfaces coniques au fur et à mesure que les clavettes 7a et 7 b s'enfoncent dans le carter 1.

Les éléments restants du bloc de serrage des figures 3 et 4 sont identiques à ceux du bloc de serrage des figures 1 et 2. En particulier, les deux clavettes 11a et 11b sont identiques à celles du bloc de serrage des figures 1 et 2. Toutefois, dans le cas du bloc de serrage des figures 3 et 4, étant donné que le carter 1 est réalisé d'une seule pièce et n'est donc pas démontable, au moins les deux parties 14 en saillie à l'une des extrémités des deux clavettes 11a et 11b doivent être fixées de manière détachable au clavettes 11a et 11b correspondantes, par exemple par des vis, comme indiqué schématiquement en 15 par un trait mixte, pour permettre la mise en place des clavettes 11a et 11b et des clavettes 7a et 7b à l'intérieur du carter 1 et pour permettre leur enlèvement hors dudit carter.

Comme on peut le voir en comparant les figures 3 et 4, d'une part, aux figures 1 et 2, d'autre part, le bloc de serrage des figures 3 et 4 est nettement plus compact que le bloc de serrage des figures 1 et 2. En outre, comme le bloc de serrage des figures 1 et 2, le bloc de serrage des figures 3 et 4 permet de serrer le câble 4 sans le blesser et sans risque de glissement entre les clavettes 11a et 11b et le câble 4. En effet, comme dans le mode de réalisation précédent, sous l'effet de la force d'enfoncement P, chacune des deux clavettes 7a et 7 b est soumise à une force $Q_1$, et sous l'effet des deux forces $Q_1$, chacune des deux clavettes 11a et 11b est soumise à une force égale à 2 $Q_2$. La formule (2), qui est valable pour les coins à surface conique, est encore valable dans le cas des coins à surface hémi-cylindrique inclinée. Dans ce cas, la valeur de la force $Q_1$ est donc donnée par la formule suivante :

$$Q_1 = \frac{P}{\pi\,tg\,(\alpha_1 + \varphi_1)} \qquad (14)$$

Dans le bloc de serrage des figures 3 et 4, la valeur de $Q_2$ est encore donnée par la formule (10), et la valeur de la force de frottement F entre chacune des deux clavettes 11a et 11b et le câble 4 est encore donnée par la formule (11). Dans ces conditions, en tenant compte des formules (10) et (14), la formule - (11) peut encore s'écrire :

$$F = \frac{f' \cdot P}{tg\,(\alpha_1 - \varphi_1) \cdot tg\,(\alpha_2 - \varphi_2)} \qquad (15)$$

En supposant que $f' = 0,1$; $\alpha_1 = 13°$; $\alpha_2 = 8°30'$ et $\phi_1 = \phi_2 = 6°$, on obtient :
$F \simeq 1,1 . P$ (16)
D'après la formule (16) on voit que,dans ce cas encore, la force de frottement F est plus grande que la force d'enfoncement P et que, par conséquent, il n'y a pas de glissement entre chacune des deux clavettes 11a et 11b et le câble 4.

Dans la forme d'exécution représentée sur les figures 5 et 6, les éléments du bloc de serrage qui sont identiques ou qui ont la même fonction que ceux du bloc de serrage des figures 3 et 4 sont désignés par les mêmes numéros de référence et ne seront donc pas à nouveau décrits en détail ici. Le bloc de serrage des figures 5 et 6 diffère de celui des figures 3 et 4 en ce que les rainures longitudinales 13 des clavettes 11aet 11b ne sont plus semi-circulaires, mais ont une forme semblable à celle des rainures 9 des deux clavettes 7a et 7 b, les deux parois latérales de chaque rainure 13 étant planes et convergeant vers le fond de la rainure en formant chacune un angle $\alpha_3$ avec le plan $PL_2$, dans lequel se déplacent les deux clavettes 11a et 11b. En outre, ces deux clavettes ne sont pas directement en contact avec le câble 4, mais une troisième paire de clavettes 16a et 16b est diposée dans les rainures 13 des deux clavettes 11a et 11b entre celles-ci et le câble 4. Les deux clavettes 16a et 16b ont une forme semblable à celle des clavettes 11a et 11b . La paroi externe, en forme de toit ou de V aplati, de chacune des deux clavettes 16a et 16b est en contact glissant avec l'une des deux parois latérales de la rainure 13 de la clavette 11a et avec l'une des deux parois latérales de la rainure 13 de la clavette 11b. Chacune des deux clavettes 16a et 16b comporte, dans sa face interne tournée vers le câble 4, une rainure longitudinale 17, à section transversale semi-circulaire, qui reçoit une partie du câble 4. Comme les clavettes 7a et 7b , les clavettes 16a et 16b sont mobiles dans le plan $PL_1$, perpendiculairement à l'axe 6.

Comme les clavettes 11a et 11b, chacune des deux clavettes 16a et 16b comporte, à chacune de ses extrémités, une partie 18 qui fait latéralement saillie vers l'extérieur et qui est en contact glissant avec les faces d'extrémité des deux clavettes 11a et 11b ou de leurs parties 14. Ainsi, les clavettes 11 a et 11b sont retenues axialement entre les parties en saillie 18 des deux clavettes 16a et 16b , mais elles peuvent se déplacer transversalement par rapport à ces dernières clavettes. En outre, pour permettre le montage des clavettes à l'intérieur du carter 1, les deux parties en saillie 18 à l'une des extrémités des clavettes 16a et 16b sont fixées de manière détachable aux clavettes correspondantes.

Comme dans le bloc de serrage des figures 3 et 4, sous l'effet d'une force d'enfoncement P, chacune des deux clavettes 7a et 7b du bloc de serrage des figures 5 et 6 est soumise à une force $Q_1$, qui est perpendiculaire à l'axe 6 et dont la valeur est donnée par la formule (14)sus-indiquée. De même, sous l'effet des deux forces $Q_1$, chacune des deux clavettes 11a et 11b est soumise à une force, qui est perpendiculaire à l'axe 6 et aux forces $Q_1$ et qui est égale à 2 $Q_2$, la valeur de $Q_2$ étant donnée par la formule (10). En outre, sous l'effet de la force 2 $Q_2$, chacune des deux clavettes11a et 11b applique à chacune des deux clavettes 16a et 16b une force $Q_3$, qui est parallèle à la force $Q_1$ et dont la valeur est donnée par la formule suivante :

$$Q_3 = \frac{2\ Q_2}{2\ tg\ (\alpha_3 + \varphi_3)} \qquad (17)$$

dans laquelle $\alpha_3$ a la signification déjà indiquée plus haut, et $\phi_3$ est tel que tg $\phi_3$ est le coefficient de frottement entre les clavettes 16a et 16b et les clavettes 11a et 11b. Ainsi, chacune des deux clavettes 16a et 16b est soumise à une force égale à 2 $Q_3$, et la valeur de la force de frottement F entre chacune des deux clavettes 16a et 16b et le câble 4 est alors donnée par la formule :
$F = \pi . 2\ Q_3 . f'$ (18)
dans laquelle f' est le coefficient de frottement entre les clavettes 16a et 16b et le câble 4. En tenant compte des formules (10), (14) et (17), la formule (18) peut encore s'écrire :

$$F = \frac{f'\ .\ P}{tg(\alpha_1 - \varphi_1).tg(\alpha_2 - \varphi_2).tg(\alpha_3 + \varphi_3)} \qquad (19)$$

Avec $f' = 0,1$;$\alpha_1 = 13°$;$\alpha_2 = \alpha_3 = 8°30'$, et $\phi_1 = \phi_2 = \phi_3 = 6°$, on obtient :
$F \simeq 4,3 . P$ (20)

On voit que, dans ce cas encore, on obtient une force de frottement F qui est nettement plus grande que la force d'enfoncement P,et que par suite il n'y a aucun risque de glissement entre les clavettes 16a et 16b et le câble 4. On voit aussi qu'il devient possible de serrer, sans glissement et avec des clavettes de serrage à surface interne lisse, des câbles ou autres objets allongés ayant un coefficient de frottement nettement moins bon quer 0,1. Par exemple, avec le bloc de serrage des figures 5 et 6 et avec les valeurs d'angles indiquées plus haut, avec un coefficient de frottement f' égal à 0,025, on obtiendrait encore une force de frottement F égale à 1,1 P .

Il va de soi que les formes d'exécution de la présente invention qui ont été décrites ci-dessus, ont été données à titre d'exemple purement indicatif et nullement limitatif, et que de nombreuses modifications peuvent être facilement apportées par l'homme de l'art, sans pour autant sortir du cadre de la présente invention. C'est ainsi notamment que, bien que dans les exemples chiffrés donnés plus haut, les angles $\alpha_1$ et $\alpha_2$ (figures 1 et 2) et les angles $\alpha_2$ et $\alpha_3$ (figures 5 et 6) avaient la même valeur, de même que les angles $\phi_1$ , $\phi_2$ , et $\phi_3$ , ces angles pourraient avoir des valeurs différentes, pourvu que $\phi_1$, $\phi_2$ et $\phi_3$ soient plus grands que $\phi_1$, $\phi_2$ et $\phi_3$, respectivement. En outre, bien que dans le bloc de serrage des figures 5 et 6, les surfaces internes 5 du carter 1 et les surfaces externes 8 des clavettes 7a et 7b soient hémi-cylindriques, elles pourraient être planes et inclinées comme dans le bloc de serrage des figures 1 et 2.

**Revendications**

1.-Bloc de serrage par coins réversibles pour objet allongé , tel que câble ou barre, comprenant un carter (1) de forme allongée, qui est ouvert à ses deux extrémités et qui définit un passage apte à recevoir ledit objet allongé (4), et une paire de clavettes (7a et 7b), en forme de coins, qui sont montées dans le passage du carter pour serrer ledit objet allongé, ledit passage comportant deux surfaces internes (5), qui sont respectivement disposées de part et d'autre de l'axe longitudinal (6) dudit passage et qui convergent vers une extrémité de celui-ci en faisant un angle prédéterminé ($\alpha_1$) avec ledit axe longitudinal, chacune desdites clavettes comportant une surface externe (8), qui est en contact avec une des deux surfaces internes du passage du carter, et une surface interne, qui est tournée vers ledit objet allongé et dans laquelle est formée une rainure longitudinale (9), les deux clavettes (7a et 7b) étant mobiles dans un plan ($PL_1$) qui passe par l'axe longitudinal du passage du carter, caractérisé en ce que la rainure longitudinale - (9) de chacune des deux clavettes (7a et 7b) comporte deux parois latérales planes (9a et 9b), qui convergent vers le fond de la rainure et qui font chacune un angle prédéterminé ($\alpha_2$) avec le plan($PL_1$) dans lequel se déplacent les deux clavettes, et en ce qu'il comprend en outre une seconde paire de clavettes - (11a et 11b), qui sont disposées dans les rainures longitudinales (9) de la première paire de clavettes (7a et 7b), chacune des clavettes (11 a et 11b) de la seonde paire comportant une surface externe (12) qui a, en coupe transversale, une section en V et qui est en contact avec l'une des deux parois latérales de la rainure (9) de l'une des deux clavettes (7a et 7b) de la première paire et avec l'une des deux parois latérales de la rainure (9) de l'autre clavette de la première paire, et une surface interne qui est tournée vers ledit objet allongé (4), les deux clavettes (11a et 11b ) de la seconde paire étant mobiles perpendiculairement à l'axe longitudinal (6) du passage du carter (1) dans un second plan ($PL_2$) perpendiculaire au premier plan susmentionné ($PL_1$), et des moyens d'accouplement (14) coopérant avec les clavettes (7a et 7b , 11a et 11b) des première et seconde paires pour empêcher tout mouvement relatif axial entre lesdites première et seconde paires de clavettes, tout en permettant des mouvements relatifs transversaux entre lesdites première et seconde paires de clavettes.

2.-Bloc de serrage selon la revendication 1, caractérisé en ce que chacune des deux clavettes (11a et 11b) de la seconde paire comporte, à chacune de ses extrémités, une partie (14) qui fait latéralement saillie vers l'extérieur et qui est en contact glissant avec les faces d'extrémité des deux clavettes (7a et 7b) de la première paire, lesdites parties (14) en saillie formant lesdits moyens d'accouplement.

3.-Bloc de serrage selon la revendication 1 ou 2, caractérisé en ce que les deux surfaces internes (5) du passage du carter (1) et les surfaces externes (8) des clavettes (7a et 7b ) de la première paire sont planes et perpendiculaires au premier plan ($PL_1$).

4.-Bloc serrage selon la revendication 1 ou 2, caractérisé en ce que les deux surfaces internes (5) du passage du carter (1) et les surfaces externes (8) des clavettes (7a et 7b ) de la première paire sont hémi-cylindriques, les axes des surfaces hémi-cylindriques faisant ledit angle prédéterminé ( $\alpha$ ) avec l'axe longitudinal (6) dudit passage.

5.-Bloc de serrage selon la revendication 4, caractérisé en ce que les surfaces internes (5) du passage du carter (1) et les surfaces externes (8) des clavettes (7a et 7 b) de la première paire sont en gradins.

6.-Bloc de serrage selon la revendication 4 ou 5, caractérisé en ce que le carter (1) a une surface externe cylindrique.

7.-Bloc de serrage selon l'une quelconque des revendications 1 à 6, caractérisé en ce que chacune des deux clavettes (11a et 11b) de la seconde paire comporte, dans sa surface interne, une rainure longitudinale (13) ayant une section transversale semi-circulaire, qui reçoit une partie de l'objet allongé (4) à serrer.

8.-Bloc de serrage selon l'une quelconque des revendications 1 à 6, caractérisé en ce que chacune des deux clavettes (11a et 11b) de la seconde paire comporte, dans sa surface interne, une rainure longitudinale (13) ayant deux parois latérales planes, qui convergent vers le fond de la rainure (13) et qui font chacune un angle prédéterminé ($\alpha_3$)avec le second plan ($PL_2$) dans lequel se déplacent les deux clavettes (11a et 11b) de la seconde paire, et en ce qu'il comprend en outre une troisième paire de clavettes (16a et 16b), qui sont disposées dans les rainures longitudinales (13) de la seconde paire de clavette (11a et 11b), chacune des clavettes (16a et 16b) de la troisième paire comportant une surface externe qui a, en coupe transversale, une section en V et qui est en contact avec l'une des deux parois latérales de la rainure (13) de l'une des deux clavettes (11a et 11b) de la seconde paire et avec l'une des deux parois latérales de la rainure (13) de l'autre clavette de la seconde paire, et une surface interne qui est tournée vers ledit objet allongé (4), les deux clavettes (16a et 16b) de la troisième paire étant mobiles perpendiculairement à l'axe longitudinal (6) du passage du carter (1) dans le premier plan ($PL_1$) dans lequel se déplacent les clavettes - (7 a et 7b) de la première paire, et des seconds moyens d'accouplement (18) coopérant avec les clavettes (11a et 11b , 16a et 16b) des seconde et troisième paires pour empêcher tout mouvement relatif axial entre lesdites seconde et troisième paires de clavettes, tout en permettant des mouvements relatifs transversaux entre lesdites seconde et troisième paires de clavettes.

9.-Bloc de serrage selon la revendication 8, caractérisé en ce que chacune des deux clavettes (16a et 16b) de la troisième paire comporte, à chacune de ses extrémités, une partie (18) qui fait latéralement saillie vers l'extérieur et qui est en contact glissant avec les faces d'extrémité des deux clavettes (11a et 11b) de la seconde paire, lesdites parties en saillie (18) formant lesdits seconds moyens d'accouplement.

10.-Bloc de serrage selon la revendication 8 ou 9, caractérisé en ce que chacune des deux clavettes - (16 a et 16b) de la troisième paire comporte, dans sa surface interne, une rainure longitudinale (17) ayant une section transversale semi-circulaire, qui reçoit une partie de l'objet allongé (4) à serrer.

FIG_1

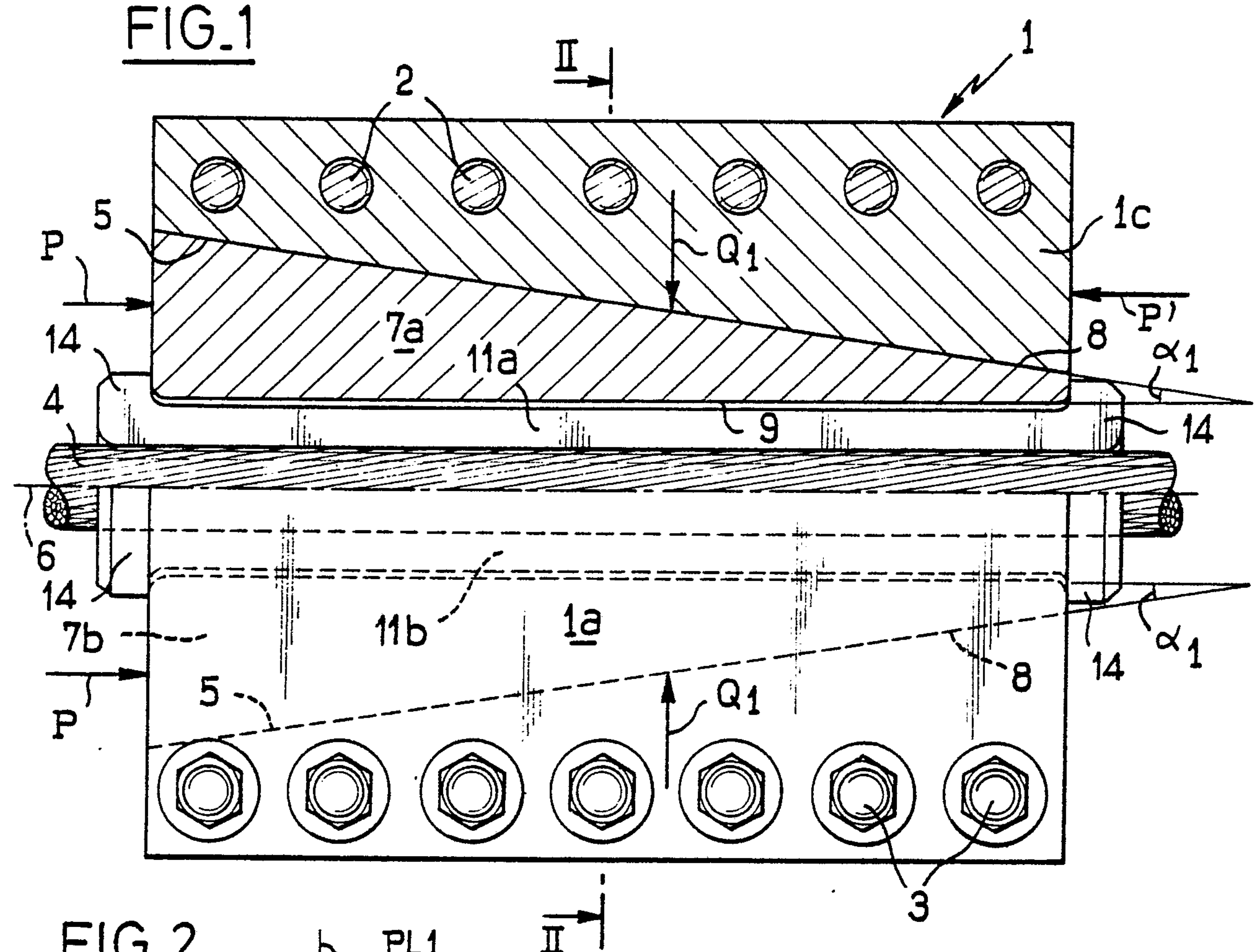


FIG.2

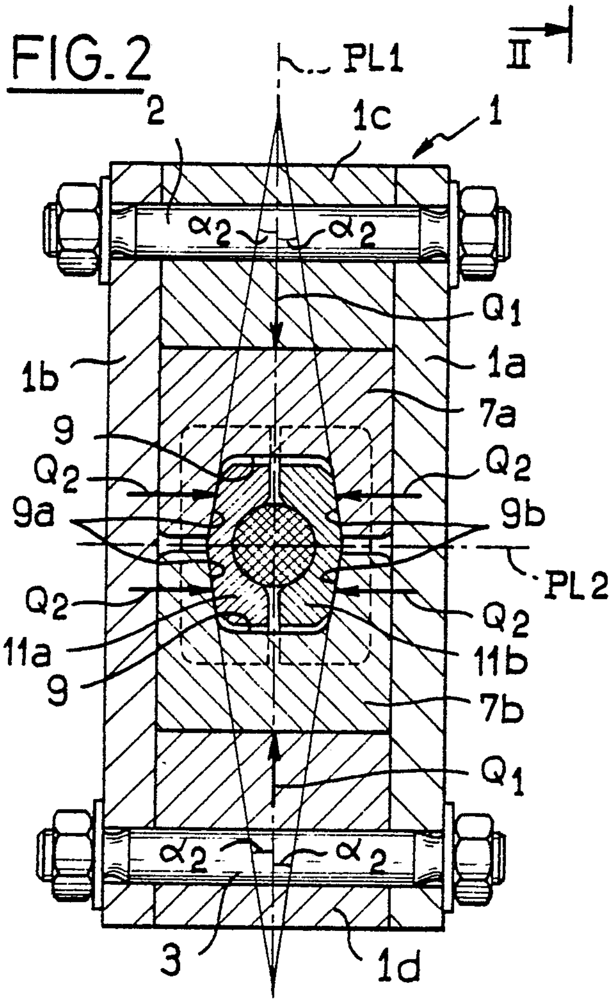


FIG.2a

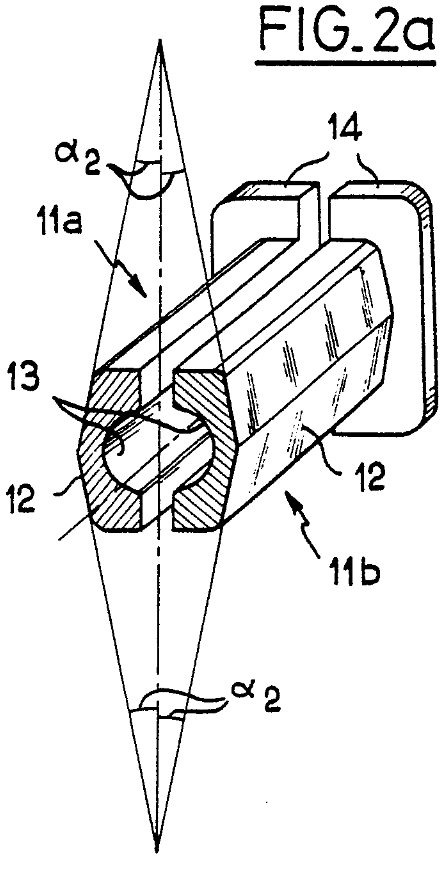

FIG_3

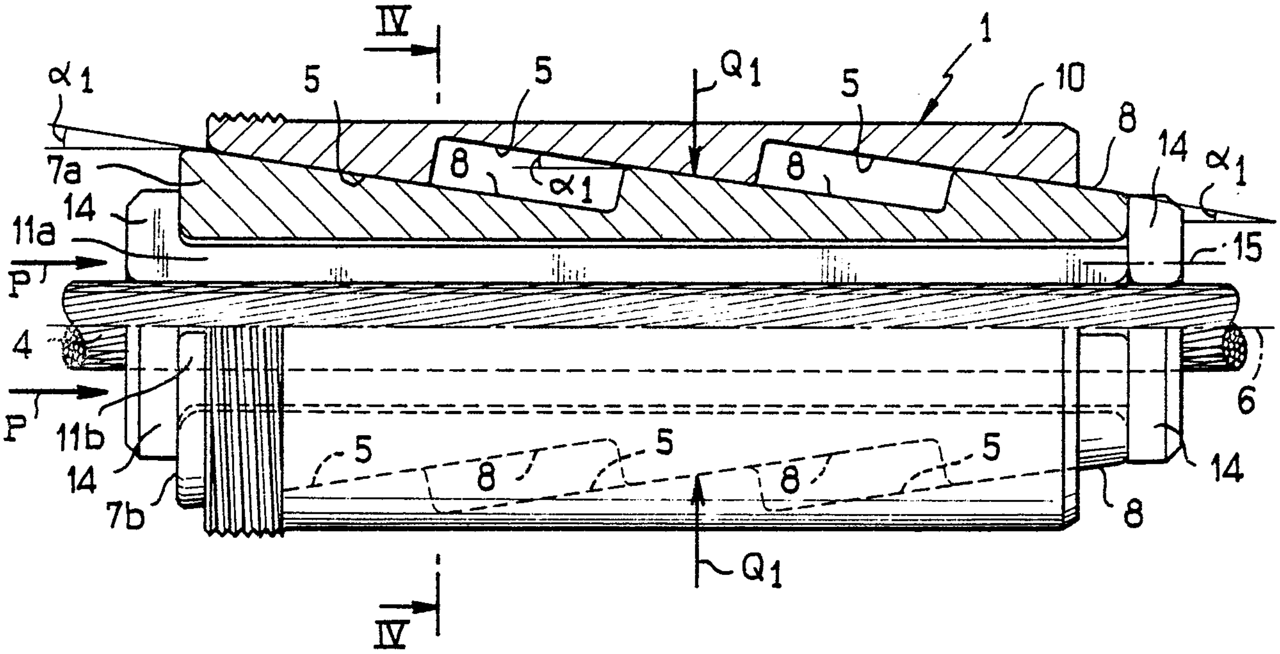
IV
IV
$\alpha_1$
5
5
$Q_1$
1
10
5
8
14
7a
8
8
$\alpha_1$
11a
15
P
4
6
P
11b
14
5
8
5
8
5
14
7b
8
$Q_1$

FIG_4

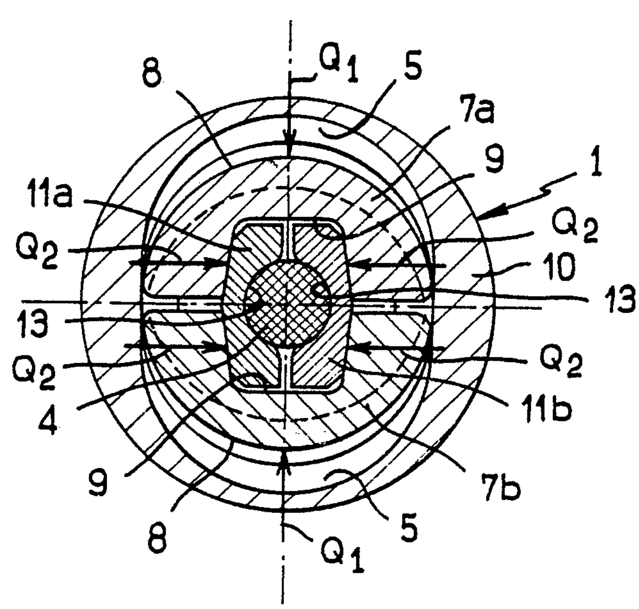
8
$Q_1$
5
7a
9
1
11a
$Q_2$
$Q_2$
10
13
13
$Q_2$
$Q_2$
4
11b
9
7b
8
5
$Q_1$

FIG.5

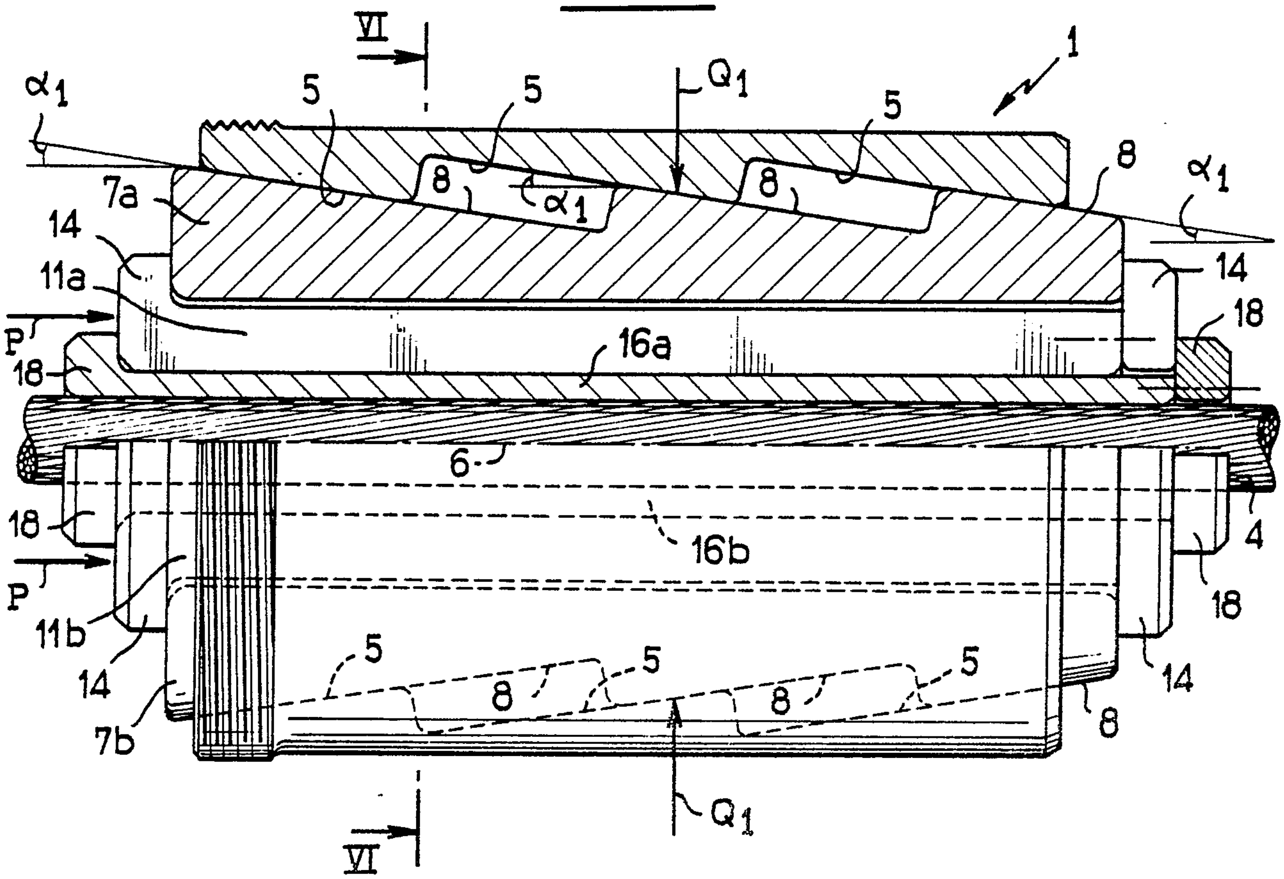
VI
α1
5
5
Q1
5
1
8
7a
8
α1
8
α1
14
14
11a
18
P
16a
18
6
18
4
16b
P
18
11b
14
14
5
5
5
8
8
7b
8
Q1
VI

FIG.6

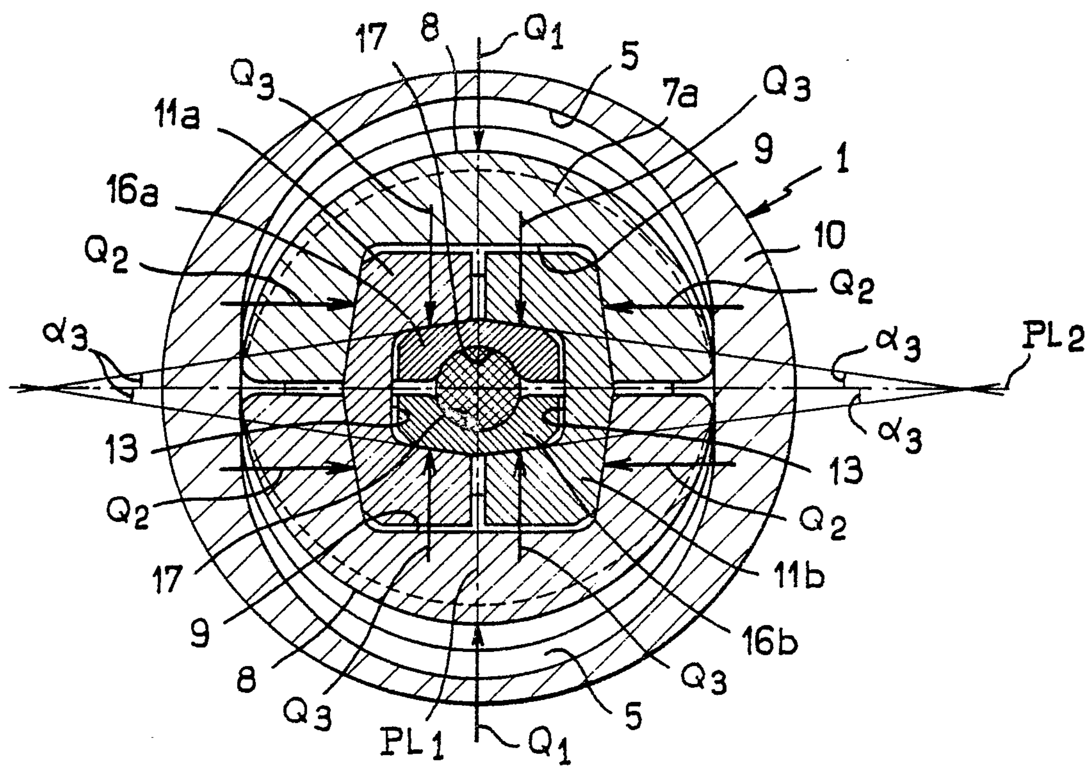
17
8
Q1
5
Q3
7a
Q3
11a
9
1
16a
10
Q2
Q2
α3
α3
PL2
13
α3
13
Q2
Q2
17
11b
9
16b
8
Q3
Q3
PL1
Q1
5

Office européen des brevets

# RAPPORT DE RECHERCHE EUROPEENNE

Numero de la demande

EP 86 40 2490

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl.4) |
|---|---|---|---|
| X | FR-A-1 091 540 (WARBURTON) * Page 2, colonne de droite, ligne 16 - page 3, colonne de gauche, ligne 12; figures 2,5 * --- | 1,3,7 | F 16 G 11/04 |
| A | FR-A-2 343 168 (DERVAUX) * Page 3, ligne 27 - page 6, ligne 30; figures 3,4,8 * --- | 1,3 | |
| A | FR-A-2 218 790 (DERVAUX) * Page 2, ligne 33 - page 4, ligne 18; figures 1,2,7,8 * --- | 4-6 | |
| D,A | US-A-1 637 270 (NEELY) --- | | |
| D,A | US-A-2 146 575 (HEFFTNER) --- | | DOMAINES TECHNIQUES RECHERCHES (Int. Cl.4) |
| D,A | US-A-2 958 916 (DOW) --- | | F 16 G<br>H 02 G<br>E 21 B |
| D,A | US-A-3 758 922 (FIELD) --- | | |
| D,A | US-A-1 146 801 (KLEIN) --- -/- | | |

Le présent rapport de recherche a été établi pour toutes les revendications

| Lieu de la recherche | Date d'achèvement de la recherche | Examinateur |
|---|---|---|
| LA HAYE | 29-05-1987 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

Office européen des brevets

# RAPPORT DE RECHERCHE EUROPEENNE

Numero de la demande

EP 86 40 2490

## DOCUMENTS CONSIDERES COMME PERTINENTS

Page 2

| Catégorie | Citation du document avec indication, en cas de besoin, des parties pertinentes | Revendication concernee | CLASSEMENT DE LA DEMANDE (Int. Cl. 4) |
|---|---|---|---|
| D,A | DE-C- 405 524 (SIEMENS)<br>--- | | |
| D,A | US-A-2 400 514 (KANTNER)<br>--- | | |
| D,A | US-A-4 381 584 (COYLE)<br>--- | | |
| D,A | EP-A-0 057 622 (KLEY-FRANCE)<br>--- | | |
| D,A | TECHNIQUES DE L'INGENIEUR - MECANIQUE ET CHALEUR, vol. 3, mai 1954, pages B 602-1 - B 602-3; C.BOULET: "Organes de machines"<br>----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 29-05-1987 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant